# EUROPEAN PATENT APPLICATION

(11) **EP 4 681 910 A1**
(43) Date of publication of application: **21.01.2026**
(21) Application number: 25186104.3
(22) Date of filing: 30.06.2025
(51) Int. Cl.: B29C 65/36, B29C 65/78, B29C 65/00, B65B 51/22, B65B 61/18, B65D 5/06, B29L 31/00, B65B 7/28

(54) **WELDING HEAD FOR A CAPPING APPARATUS OF A PACKAGING MACHINE FOR PRODUCING SEALED PACKAGES, AND METHOD FOR APPLYING CAPS TO SEALED PACKAGES**

(30) Priority: 16.07.2024 IT 202400016462
(71) Applicant: Tetra Laval Holdings & Finance S.A., 1009 Pully (CH)
(72) Inventor: MARINO, Alessandro, 41123 Modena (IT); ZUCCOTTI, Alessandro, 41123 Modena (IT)
(74) Representative: Tetra Pak Patent Attorneys

(57) **Abstract**

There is described a welding head (17) configured to weld a cap (6) to a pouring collar (5) and comprising: a support portion (20) configured to be advanced along an operative path (P) for following the sealed package (2) along an advancement direction (D); a welding portion (22) movably coupled to the support portion (20) and including a welding device (23) configured to interact with the cap (6) for welding the cap (6) thereon (5); the welding portion (22) is configured to move, with respect to the support portion (20), between a first position in which it is aligned in a resting configuration with the support portion (20), and a plurality of second positions in which it is displaced relatively to the support portion for assuming a corrected configuration thereby adapting to an actual positioning of the cap (6) with respect to the advancement direction (D); the welding head (17) further comprises a magnetic device (25) configured to bias the welding portion (22) towards the first position.

## Description

### TECHNICAL FIELD

The present invention relates to a welding head for a capping apparatus of a packaging machine for producing sealed packages containing a pourable product, preferably a pourable food product.

The present invention also relates to a method for applying caps to sealed packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which form and fill the packages starting from a multilayer web of packaging material.

In particular, a continuous tube is formed from the web of packaging material which is initially wound in a reel and fed through a plurality of unwinding rollers.

The web of packaging material is typically maintained in a closed, sterile environment, and, while advanced by the aforementioned unwinding rollers, is folded to form the tube by means of a known web folding unit and then sealed longitudinally.

In order to perform the package forming operations, the tube is continuously fed along a straight vertical direction, is filled with the sterilized food product from above and is formed, sealed and subsequently cut along equally spaced transversal cross-sections extending along a direction orthogonal to the vertical direction, according to a manner known and not described in detail.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof.

The finished packages are thereby obtained.

In light of the above, the packaging machine comprises a package forming apparatus for forming the aforementioned finished packages.

Some packaging machines are configured to produce packages comprising a main body formed from the multilayer packaging material and an opening device arranged about a pouring outlet of the main body. The opening device is configured to allow for selectively opening and closing the pouring outlet.

A typical opening device comprises a pouring neck or collar arranged about the pouring outlet and a lid or cap secured to the collar and controllable between a closing position and an opening position.

Therefore, a typical packaging machine for producing such packages having a respective opening device comprises the aforementioned package forming apparatus and a capping apparatus configured to apply at least the cap to the respective package.

The use of webs of packaging material provided, within the packaging machine, with a longitudinal sequence of pouring collars already pre-applied thereon is increasingly widespread.

More precisely, the package forming apparatus may be configured to produce packages having both the respective main body formed form the multilayer packaging material and one pouring collar arranged about the respective pouring outlet.

In this case, the capping apparatus is configured to apply and secure each cap onto the respective collar, which is already pre-applied onto the respective package.

In such a case, a typical capping apparatus comprises a conveyor device configured to advance a succession of packages originating from the package forming apparatus along an advancement direction, a feeding unit for sequentially feeding the caps towards the collars, at least one application head configured to secure each cap to the relative collar, and a welding head configured to weld each cap to the respective collar.

A capping apparatus of the above-mentioned type is described in WO-A-2017060060, filed in the name of the Applicant.

In particular, the feeding unit includes a chute defining a sort of guide onto which the caps slide up to the respective collars, sequentially.

The application head secures the cap, previously fed to the collar, onto the same collar, for example by screwing and/or push-fitting.

The welding head welds the cap to the collar by electromagnetic induction, according to the manner described in WO-A-2017060060.

In particular, each collar is provided with a tearable closing element which initially seals the pouring outlet and is configured to be teared, along a circular tear line, upon the first opening of the opening device.

Such closing element is formed in one piece with a protruding portion extending within the collar.

The cap includes a disk-shaped welding promoting element, or "welding disk", which includes a heat-sealable layer and an electrically conductive layer, e.g. made of aluminum.

The welding disk is welded by electromagnetic induction to the protruding portion: the electric current induced in the conductive layer by an inductor of the welding head melts the heat-sealable layer, thereby welding the welding disk to the protruding portion.

In other words, the welding head is configured to generate an electric current in the conductive layer of the welding disk which melts the heat-sealable layer by Joule effect. The molten heat-sealable layer adheres to the protruding portion, which consequently becomes permanently attached to the cap.

In this way, when removing the cap from the collar for the first time, the protruding portion and the closing element remain attached to the cap itself, thereby causing the aforementioned tear, and therefore the opening of the pouring outlet.

Each application head and welding head is movable, in a reciprocating manner, along the advancement direction of the packages, so as to follow the respective opening devices along such direction in order to perform the respective operations thereon.

As it is known, a nominal alignment and centering of the inductor with the welding disk is crucial for an optimal welding of the lid to the collar, from which then depends a correct tearing of the closing element and, therefore, the opening of the pouring outlet.

However, the possibility of a misalignment of the caps, while conveyed along the advancement direction, with respect to the inductor of the welding head is known.

To this end, the welding head as described in WO-A-2017060060 comprises a compensating device that allows the inductor to be centered relative to each cap.

In detail, the welding head includes a cart portion (or support portion) and an induction portion. The cart portion carries the induction portion and is configured to move in a reciprocating manner along the advancement direction by means of a moving mechanism. The induction portion is movably coupled to the cart portion with the interposition of the compensating device.

In greater detail, the compensating device is configured to actively control the induction portion in a first configuration, in which the induction portion is rigidly locked with the cart portion, thereby integrally following the movements thereof, and a second configuration, in which the induction portion is temporarily decoupled from the cart portion, thereby being free of moving, with respect to the cart portion, along a plane, in order to adapt to the actual position of each cap.

Each welding head also includes a pair of gripping members, i.e. clamps, which are configured to grip each cap once the induction portion is decoupled from the cart portion, thereby allowing the centering of the induction portion, and therefore of the inductor, with the respective cap.

Normally, the compensating device is actuated pneumatically or electronically, i.e. includes a pneumatic or electric actuator for actively controlling the induction portion between the first configuration and the second configuration.

Although the welding heads, and therefore the capping apparatuses and packaging machines, of the above-mentioned type work satisfyingly well, the Applicant has observed that they are still open to further improvement, in particular as per the simplification of their architecture, the reduction of the number of components and their lifespan.

### DISCLOSURE OF INVENTION

It is therefore an object of the present invention to provide a welding head for a capping apparatus which is designed to meet the above-mentioned need in a straightforward and low-cost manner.

This object is achieved by a welding head as claimed in the appended independent claim 1.

It is a further object of the present invention to provide a method for applying caps to sealed packages which is designed to meet the above-mentioned need in a straightforward and low-cost manner.

This object is achieved by a method as claimed in claim 15.

Preferred embodiments of the present invention are laid down in the appended dependent claims.

### BRIEF DESCRIPTION OF THE DRAWINGS

A non-limiting embodiment of the present invention will be described by way of example with reference to the accompanying drawings, in which:
Figure 1 is a schematic perspective view, with parts removed for clarity, of a packaging machine including a capping apparatus comprising a welding head according to the present invention;
Figure 2 is a sectioned view of an opening device comprising a cap and a collar coupled and welded to one another;
Figure 3 is a side view, with parts removed for clarity, of the capping apparatus;
Figures 4a and 4b are bottom views, with parts removed for clarity, of the welding head in two distinct operative configurations; and
Figure 5a and 5b are perspective views, with parts removed for clarity, of the welding head in the two distinct operative configurations.

### BEST MODE FOR CARRYING OUT THE INVENTION

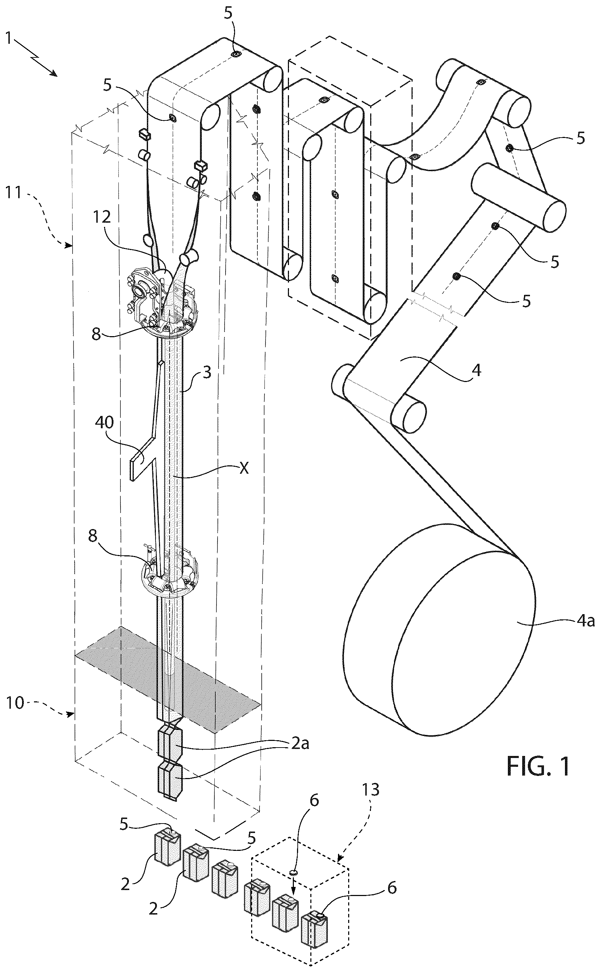

With reference to Figure 1, number 1 indicates as a whole a non-limiting example of a packaging machine configured for producing sealed packages 2 containing a pourable product, preferably a pourable food product such as pasteurized or UHT milk, water, fruit juice, wine, peas, beans, etc.

In detail, packaging machine 1 is configured to form, seal and fold packages 2 starting from a web 4 of packaging material, which is initially wound in a reel 4a, and then folded into a tube 3 of packaging material, according to a manner known and not described in detail.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

As said, the packaging material is initially provided in the form of a web 4.

The present disclosure refers to a packaging machine 1 which operates with a web 4 provided with a longitudinal sequence of pouring necks or collars 5 pre-applied thereon, as shown in Figure 1.

In particular, each one of the aforementioned collars 5 is preferably made of plastic material and is adapted to receive a lid or cap 6 (preferably made of plastic material as well). Each collar 5 is pre-applied by a molding process on web 4 prior to the formation of tube 3, in particular by an injection molding process, according to a manner known and not described in detail.

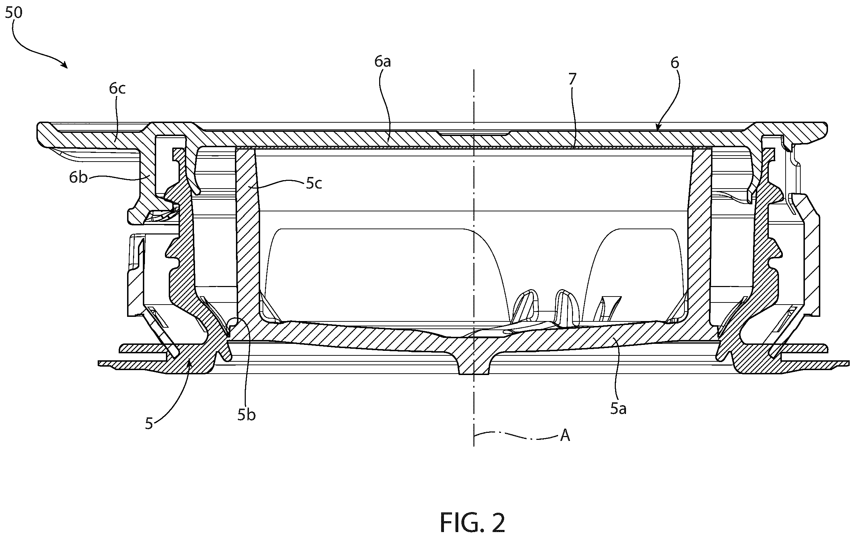

Each collar 5 and the respective cap 6 define, together, an opening device 50 (Figure 2) which is configured to be arranged about a pouring outlet (not shown) of the package 2. The pouring outlet may include a membrane (in particular a pre-laminated hole, also known as PLH) closing the pouring outlet.

In detail, opening device 50 is configured to allow for selectively opening and closing the respective pouring outlet, according to a manner known, thereby selectively allowing the outpour of the pourable product contained in the package 2.

To this end, collar 5 is fixed to a main body of package 2 and cap 6 is secured to collar 5 and is controllable between a closing position (shown in figure 2) and an opening position (not shown).

Each cap 6 may be (repeatably) moveable between the respective closing position and the respective opening position.

Opportunely, each cap 6 is secured to the respective package 2 and is in the closing position when being delivered to an end user.

Collar 5 may have an annular shape. Preferably, collar 5 may have a circular shape, as shown in the appended Figures. In detail, collar 5 has a cylindrical shape.

Cap 6 comprises an end wall 6a, which is preferably circular (discoidal). Cap 6 further comprises a side wall 6b, which is preferably cylindrical and extends from end wall 6a. Side wall 6b extends around a central axis of cap 6, whereas end wall 6a extends transversely, preferably orthogonally, to such central axis.

Side wall 6b is provided with one or more internal locking members configured to engage corresponding locking members provided on an external surface of collar 5.

Alternatively, side wall 6b may be provided with an internal threading adapted to cooperate with a corresponding external threading on collar 5.

Cap 6 also have a protrusion 6c extending radially from side wall 6b, preferably at end wall 6a, and adapted to aid the opening and closing movement of cap 6.

To this end, cap 6 is preferably hinged to collar 5. This may reduce the risk of dispersing cap 6 in the environment.

Cap 6 is further provided with a welding promoting element, also known as welding disk 7. Welding disk 7 is anchored to an inner surface of end wall 6a, i.e. to the surface that in use faces collar 5 and the package 2.

Welding disk 7 includes an electrically conductive layer (or portion), preferably made in an electrically conductive metallic material such as aluminum, and a heat-sealable layer (or portion), i.e. a portion made of a material that melts under a specific temperature, such as polyethylene.

Hence, welding disk 7 is defined by a multilayer sheet element.

As explained below, cap 6 and collar 5 are permanently joined to one another via welding disk 7.

Collar 5 defines a pouring spout through which the content of package 2 can be poured, in use, by a user. Collar 5 extends around a central axis A. When cap 6 is in the aforementioned closing position, axis A coincides with the central axis of cap 6.

The aforementioned pouring outlet of package 2 is initially closed by a closing element 5a integrally connected (co-molded) with collar 5 at a tear line 5b, along which closing element 5a can be detached from collar 5.

In detail, closing element 5a is formed integrally with a protruding portion 5c extending axially through the pouring spout defined by the collar 5.

Protruding portion 5c is welded to end wall 6a via the welding disk 7.

Once the protruding portion 5c is welded to end wall 6a, upon the first opening of cap 6 the upward movement of the protruding portion 5c causes the closing element 5a to break along tear line 5b, thereby determining the opening of the pouring outlet and allowing the outflow of the pourable product from the inside of the package 2.

As schematically shown in Figure 1, packaging machine 1 comprises conveying means configured to advance the web 4 along an advancement path.

With reference to Figure 1, packaging machine 1 comprises a tube folding device 8 for progressively folding the advancing web 4 into a tube 3 of packaging material, in a manner known and not described in detail.

Packaging machine 1 comprises a sealing element 40 for providing tube 3 with a longitudinal seal, in a manner known and not described in detail.

Packaging machine 1 comprises a sterilization unit configured for applying a sterilizing agent, for example containing hydrogen peroxide, on web 4 prior to its folding into tube 3.

Packaging machine 1 comprises a forming and sealing unit 10 for forming tube 3 by imparting a predetermined external shape, corresponding to a precursor of the shape of package 2, to successive longitudinal portions of tube 3, and for sealing tube 3 at equally spaced cross-sections.

Packaging machine 1 comprises an isolation chamber 11 internally defining an environment containing a controlled atmosphere, in particular sterile and/or aseptic gas, preferably sterile and/or aseptic air, and housing the forming and sealing unit 10 and the tube folding device 8.

Packaging machine 1 comprises a filling system 12 (only partially shown) configured to fill tube 3 with the pourable product.

Preferably, forming and sealing unit 10 has a longitudinal axis X along which tube 3 is fed, in use.

Such longitudinal axis X is parallel to a straight direction, which preferably is a straight vertical direction.

Hence, in use, tube 3 is fed along the longitudinal axis X, downwards, and while being filled from above is formed and sealed by forming and sealing unit 10, according to a manner known and not described in detail.

More specifically, tube 3 is drawn (downwards) along the longitudinal axis X by forming and sealing unit 10 in a known manner.

In this way, a plurality of pillow packs 2a are obtained.

Packaging machine 1 further comprises a folding unit (known per se and not shown) for folding the pillow packs 2a, thereby obtaining packages 2, according to a manner known and not described in detail.

In particular, each package 2 is folded in such a way that the respective collar 5 is arranged on a top wall of the package 2, according to a manner known and not described in detail.

Packaging machine 1 further comprises a capping apparatus 13 configured for securing caps 6 onto collars 5. In particular, capping apparatus 13 is configured to sequentially secure each cap 6 to a respective collar 5.

Capping apparatus 13 is conveniently arranged downstream of the folding unit and is configured to receive filled, formed, sealed and folded packages 2.

Please note that for reasons of simplicity, in the present description, when discussing operation of capping apparatus 13, one does not use different terms to indicate packages 2 which still need to receive the respective caps 6 and which have received the respective caps 6.

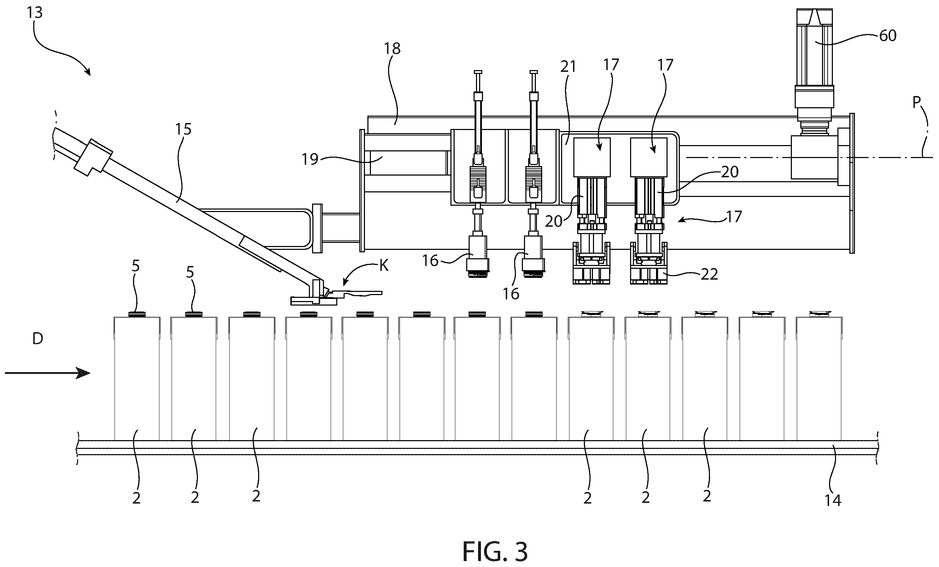

As visible in Figure 3, capping apparatus 13 comprises a conveyor 14, for example a belt conveyor, configured to advance a succession of packages along an advancement direction D and through an application station K.

Capping apparatus 13 comprises a feeding unit 15 configured to sequentially feed caps 6 towards application station K.

In detail, feeding unit 15 includes a slide rail or chute adapted to convey caps 6 at application station K, at which each cap 6 is released from the chute and is arranged onto one respective collar 5, while the respective package 2 is advanced by conveyor 14 along direction D.

Capping apparatus 13 preferably comprises at least one application head 16, preferably two in the embodiment shown, arranged downstream of feeding unit 15 and configured to secure cap 6 to collar 5 and/or to impart a predetermined orientation to cap 6 relative to collar 5. In particular, application head 16 is configured to push and/or screw each cap 6 to the respective collar 5.

Capping apparatus 13 further comprises at least one welding head 17, preferably two in the embodiment shown, arranged downstream of feeding unit 15, and in particular downstream of application head 16 and configured to weld each cap 6 to the respective collar 5.

Capping apparatus 13 comprises a fixed frame 18 and a guiding rail 19 mounted onto frame 18 and extending parallel to advancement direction D.

Reference is made in the following to a single welding head 17, to a single package 2 and to a single opening device 50 (and therefore to a single pair of cap 6 and collar 5). However, the feature described hereinafter are equally applicable to each welding head 17, package 2 and opening device 50.

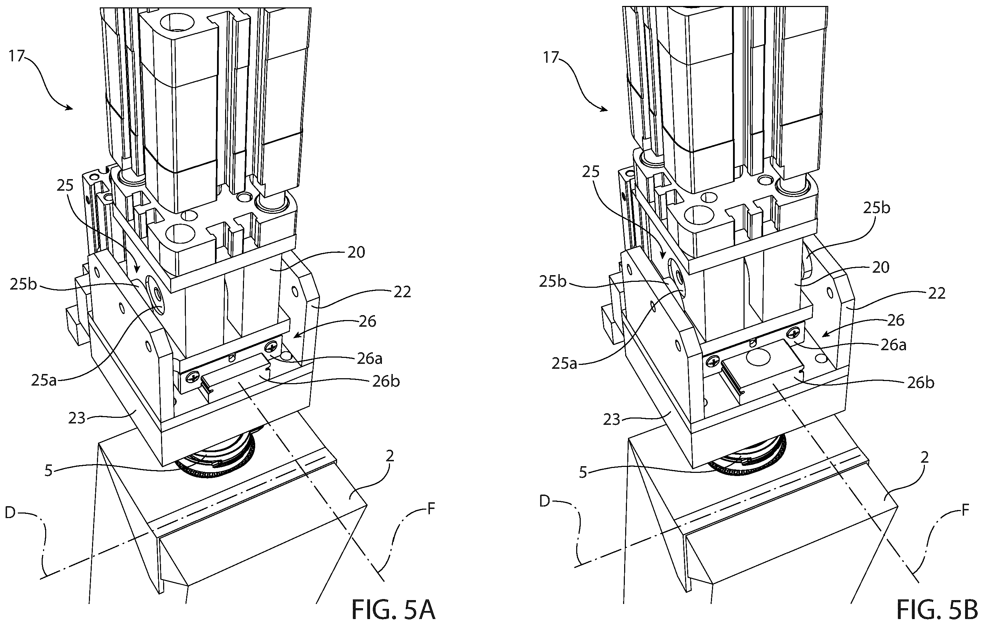

As visible in Figures 3, 5a and 5b, welding head 17 comprises a support portion 20 configured to be advanced along an operative path P for following package 2 along advancement direction D.

Opportunely, path P is parallel to direction D and, in particular, to guiding rail 19.

In particular, support portion 20 is slidably coupled to guiding rail 19 and is configured to slide along guiding rail 19, thereby determining the advancement of welding head 17 along direction D and path P.

In detail, capping apparatus 13 comprises an actuator device 60, known per se and not described in detail, for driving a reciprocating motion of support portion 20 along guiding rail 19.

In this regard, support portion 20 comprises a cart member 21 slidably coupled to guiding rail 19. Cart member 21 is moved by the actuator device 60 in a reciprocating manner, along direction D and path P. The reciprocating motion allows for sequentially following each package 2 which advances along direction D.

Hence, support portion 20 defines a cart portion of welding head 17.

Welding head 17 further comprises a welding portion 22 movably coupled to support portion 20 and including a welding device 23 configured to interact with cap 6 for welding cap 6 to collar 5.

In particular, welding device 23 includes an electromagnetic inductor (known per se and not shown) configured to induce an electric current in the aforementioned electrically conductive layer of welding disk 7, so as to melt the heat-sealable layer of welding disk 7 thereby determining a permanent joining of protruding portion 5c to the inner side of end wall 6a, and therefore of cap 6 to collar 5.

It may happen that cap 6 is not perfectly positioned with respect to advancement direction D. That is, cap 6 advanced by package 2 (conveyed by conveyor 14) may be mispositioned and/or misaligned with respect to a nominal linear trajectory parallel to advancement direction D. For example, such cap 6 may be offset transversally (or orthogonally) with respect to such linear trajectory parallel to advancement direction D. This may cause a misalignment of welding device 23 with cap 6.

As said, a nominal alignment and centering of welding device 23, and therefore of welding portion 22, with welding disk 7 is crucial for an optimal welding of cap 6 to collar 5, from which then derives a correct tearing of closing element 5a.

To this end, welding portion 22 is configured to move, with respect to support portion 20, between a first position (Figures 3 and 5a) in which it is aligned in a resting configuration with support portion 20, and a plurality of second positions (one example of which is shown in Figure 5b) in which it is displaced relatively to support portion 20 for assuming a corrected configuration thereby adapting to an actual positioning of cap 6 with respect to advancement direction D.

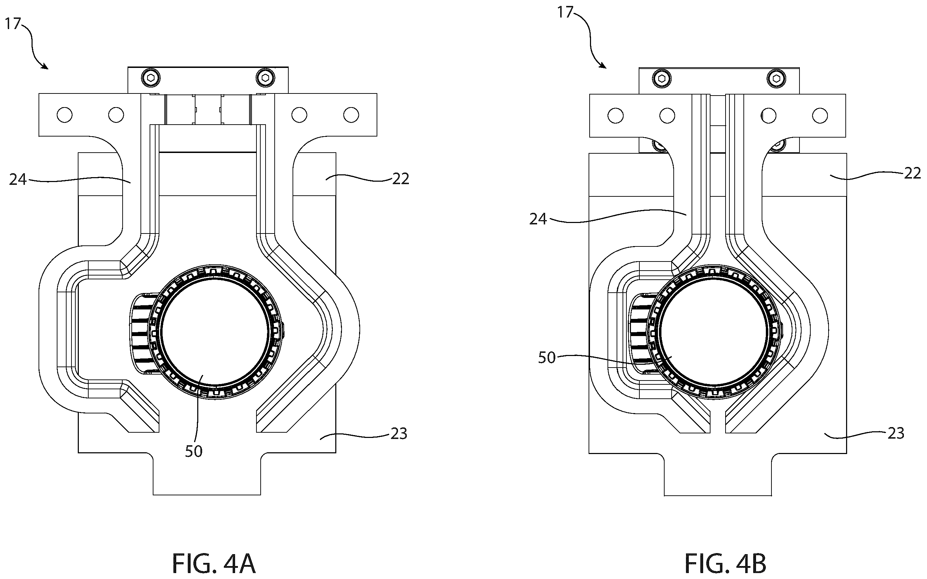

In order to achieve this movement between the first position and one second position, i.e. between the resting configuration and the corrected configuration, welding head 17 comprises a gripper member 24 carried by welding portion 22 and configured to be controlled between an open configuration (Figure 4a), for receiving or releasing cap 6, and a closed configuration (Figure 4b), for gripping cap 6 thereby locking welding portion 22 (and therefore welding device 23) to cap 6 (i.e. making welding portion 22 integral in movement with cap 6), and therefore to collar 5 and the sealed package 2, during the welding.

Preferably, gripper member 24 has two opposing clamps which clamp cap 6 between them.

In particular, the clamps of gripper member 24 are movable between a closed position for gripping the cap 6, thereby defining the closed configuration of gripper member 24, and an open position for releasing (or receiving) the cap 6, thereby defining the open configuration of gripper member 24.In use, when a package 2 is advanced by conveyor 14 along direction D, it may happen that such package is mispositioned with respect to a nominal positioning thereof.

Accordingly, the relative collar 5, and therefore the relative cap 6 applied thereon by feeding unit 15, are misaligned (or mispositioned) with respect to advancement direction D, for example transversally to advancement direction D (and in particular to the aforementioned linear trajectory parallel to advancement direction D).

When gripper member 24 grips cap 6, welding portion 22, which as explained above is movably mounted to support portion 20 (in a manner better explained below), moves in the direction of the actual position of cap 6 as a result of the interaction between the clamps of gripper member 24 and cap 6, thereby adapting to such actual position of cap 6.

According to an important aspect of the present disclosure, welding head 17 further comprises a magnetic device 25 configured to bias (i.e. move back) welding portion 22 (from each one of the second positions) towards the first position.

In particular, magnetic device 25 is configured to exert a magnetic force on welding portion 22 for biasing welding portion 22 towards the first position and in the resting configuration.

More in particular, magnetic device 25 defines a magnetic spring for biasing welding portion 22 towards the first position and in its resting configuration.

More specifically, the magnetic force defines an elastic return force of such magnetic spring.

According to a further aspect of the present disclosure, gripper member 24 is configured, when controlled in the closed configuration thereby gripping cap 6, to determine a movement of welding portion 22 towards said corrected configuration by overcoming said magnetic force.

In detail, magnetic device 25 is configured, when gripper member 24 is controlled in the open configuration thereby releasing cap 6, to drive a movement of welding portion 22 (and therefore of welding device 23) back in the first position via the aforementioned magnetic force.

In greater detail, gripper member 24 is configured to maintain welding portion 22 in the corrected configuration by overcoming the magnetic force as long as the gripper member 24 itself is controlled in its closed configuration and grips the cap 6.

Thanks to the above configuration, a passive control of the movement of welding portion 22 relative to support portion 20 can be obtained, without the need for any active control systems or devices.

Expediently, gripper member 24 is coupled to welding portion 22 so as to be integral in motion therewith.

This enables the welding portion 22 to be "locked" to the cap 6, and therefore to adapt to the actual position of cap 6, upon gripping cap 6 with gripper member 24.

Magnetic device 25 includes a number of first magnets 25a integrally carried by support portion 20, and a number of second magnets 25b integrally carried by welding portion 22. Preferably, the first magnets 25a are permanent magnets and/or the second magnets 25 are permanent magnets.

According to the non-limiting preferred embodiment shown, magnetic device 25 includes only one first (permanent) magnet 25a and only one second (permanent) magnet 25b.

The first (permanent) magnet 25a and the second (permanent) magnet 25b magnetically interact with one another for attracting welding portion 22 towards the first position, thereby biasing towards its resting configuration.

According to an alternative embodiment not shown, magnetic device 25 comprises a plurality of (e.g. three) first (permanent) magnets 25a and a corresponding number of second (permanent) magnets 25b.

Opportunely, first permanent magnet(s) 25a and second permanent magnet(s) 25b face one another by magnetic poles of opposite sign.

In this way, an attractive force is established between first permanent magnet 25a and second permanent magnet 25b, i.e. between support portion 20 and welding portion 22, which attractive force biases welding portion 22 towards the resting configuration.

In other words, welding portion 22 tends to stay in the resting configuration, while (in case of a misaligned/mispositioned cap 6) gripper member 24 determines a movement of welding portion 22 (and thus of welding device 23) in the corrected configuration against the attractive force.

As a result, once the gripper member 24 is opened, welding portion 22 automatically and passively returns in the resting configuration (first position), without the need for an active driving of such return movement.

The presence of magnetic device 25 for automatically and passively controlling the movement of welding portion 22, eliminates the need for a complicated compensating device which controls the movement of welding portion 22, such as the pneumatic and/or electric one described in the introductory portion of the present description.

As a result, the number of components of welding head 17 is significantly reduced and its architecture is highly simplified.

Moreover, the overall wear between moving parts in welding head 17 is significantly reduced, since magnetic device 25 does not require any contact between parts.

Furthermore, the above configuration allows for a high energy saving, since magnetic device 25 does not require any input of energy to operate.

Hence, the lifespan of welding head 27 is increased.

Preferably, welding head 17 comprises a guiding device 26 configured for guiding the movement of welding portion 22 between the first position and the second position (s) .

Guiding device 26 includes a slide member 26a carried by one of the support portion 20 and welding portion 22, and a rail member 26b carried by the other of the support portion 20 and welding portion 22.

According to the non-limiting preferred embodiment shown, slide member 26a is carried by, i.e. is integrally coupled with, support portion 20, whereas rail member 26b is carried by, i.e. is integrally coupled with, welding portion 22.

In detail, slide member 26a presents a longitudinal cavity which has an internal shape complementary to the external shape of rail member 26b.

This configuration is shown in Figures 5a and 5b.

Preferably, rail member 26b linearly extends along a correction direction F which is transversal, and preferably orthogonal, to advancement direction D. In particular, the longitudinal cavity is elongated along said correction direction F.

In light of the above, according to this particular embodiment of the disclosure, the adaptation/correction of the position of welding portion 22 is made along correction direction F, i.e. transversely (and preferably orthogonally) to advancement direction D.

In one embodiment, magnetic device 25 may comprise two first (permanent) magnets 25a arranged on opposite sides of support portion 20, with respect to advancement direction D, and two second (permanent) magnets 25b, arranged on opposite sides of welding portion 22, with respect to advancement direction D.

In particular, two pairs of magnetically interacting (permanent) magnets are defined, each pair including one first magnet 25a and one second magnet 25b, the two pairs being arranged on opposite sides of the welding head 17, with respect to the advancement direction D.

In this way, a balancing of the lateral forces exerted on welding portion 22 is obtained, since the attractive magnetic force exerted by the first magnet 25a on the corresponding second magnet 25b of one pair is equal, and opposite to the attractive magnetic force exerted by the first magnet 25a on the corresponding second magnet 25b of the other pair opposite to the one pair.

Therefore, the guiding device 26 is subjected to a resulting lateral force substantially equal to zero. This results in reduced wearing at the guiding device 26 and in an increased reactivity and sensitivity of the system.

Alternatively, or in addition, rail member 26b could extend parallel to advancement direction D, so that the correction occurs parallel to such direction. In particular, a further rail member and a further slide member equipped with respective permanent magnets may be provided, said further rail member and further slide member extending along a further direction (e.g. the advancement direction D), to allow that the adaptation/correction of the position of welding portion 22 is made also along the further direction (e.g. the advancement direction D).

In one embodiment, capping apparatus may compensate a position deviation of caps 6 along the advancement direction D by means of controlling the position of feeding unit 15.

The presence of guiding device 26 ensures that the adaptive/corrective movement of welding portion 22 is precise and repeatable.

Moreover, guiding device 26 provides structural rigidity to the movement of welding portion 22, which helps in maintaining the stability and accuracy of the system under dynamic loads and during operation.

From the foregoing description, it is clear how the welding head 17 and the capping apparatus 13 and packaging machine 1 allow to implement a method for securing a cap 6 to a pouring collar 5 of a sealed package 2 containing a pourable product, the method comprising the steps of:
- advancing the sealed package 2, provided with one respective collar 5, along an advancement direction D and through an application station K;
- feeding the cap 6 towards the application station K, at which the cap 6 is arranged onto the collar 5;
- preferably, controlling a support portion 20 of a welding head 17 to move along an operative path P extending along the advancement direction D, so as to follow the sealed package 2 and the assembly defined by the cap 6 arranged onto the collar 5;
- displacing a welding portion 22 of the welding head 17, with respect to the support portion 20, between a first position in which it is nominally aligned in a resting configuration with the support portion 20, and a plurality of second positions in which it is displaced relatively to the support portion 20 for assuming a corrected configuration thereby adapting to an actual positioning of the cap 6 with respect to the advancement direction D;
- moving the welding portion 22, with respect to the support portion 20, back in the first position;
wherein the step of moving the welding portion 22 back in the first position includes magnetically biasing/attracting the welding portion 22 towards the first position.

Preferably, the step of moving the welding portion 22 comprises exerting an attractive magnetic force onto the welding portion 22, so as to define a magnetic spring and so that the magnetic force defines an elastic return force of the magnetic spring.

The advantages of welding head 17 and of the method according to the present disclosure will be clear from the foregoing description.

In particular, the presence of magnetic device 25 for automatically and passively controlling the movement of welding portion 22, eliminates the need for a complicated compensating device which controls the movement of welding portion 22, such as the pneumatic and/or electric one described in the introductory portion of the present description.

As a result, the number of components of welding head 17 is significantly reduced and its architecture is highly simplified.

Moreover, the overall wear between moving parts in welding head 17 is significantly reduced, since magnetic device 25 does not require any contact between parts.

Furthermore, the above configuration allows for a high energy saving, since magnetic device 25 does not require any input of energy to operate.

Hence, the lifespan of welding head 27 is increased.

Clearly, changes may be made to welding head 17 as described herein without, however, departing from the scope of protection as defined in the accompanying claims.

## Claims

1. Welding head (17) configured to weld a cap (6) to a pouring collar (5) of a sealed package (2) containing a pourable product, the welding head (17) comprising:
- a support portion (20) configured to be advanced along an operative path (P) for following the sealed package (2) along an advancement direction (D);
- a welding portion (22) movably coupled to the support portion (20) and including a welding device (23) configured to interact with the cap (6) for welding the cap (6) to the collar (5);
wherein the welding portion (22) is configured to move, with respect to the support portion (20), between a first position in which it is aligned in a resting configuration with the support portion (20), and a plurality of second positions in which it is displaced relatively to the support portion for assuming a corrected configuration thereby adapting to an actual positioning of the cap (6) with respect to the advancement direction (D);
and wherein the welding head (17) further comprises a magnetic device (25) configured to bias the welding portion (22) towards the first position.

2. Welding head (17) as claimed in claim 1, wherein the magnetic device (25) is configured to exert a magnetic force on the welding portion (22) for biasing the welding portion (22) from each second position of said plurality of second positions towards the first position and in the resting configuration.

3. Welding head (17) as claimed in claim 2, wherein the magnetic device (25) defines a magnetic spring for biasing the welding portion (22) towards said first position and in its resting configuration, said magnetic force defining an elastic return force of the magnetic spring.

4. Welding head (17) as claimed in claim 2 or 3, and further comprising a gripper member (24) carried by the welding portion (22) and configured to be controlled between an open configuration, for receiving or releasing the cap (6), and a closed configuration, for gripping the cap (6) thereby locking the welding portion (22) to the cap (6), and therefore to the collar (5) and the sealed package (2), during the welding;
wherein the gripper member (24) is configured, when controlled in the closed configuration thereby gripping the cap (6), to determine a movement of the welding portion (22) towards said corrected configuration and/or towards the second position of said plurality of second positions by overcoming said magnetic force;
and wherein the magnetic device (25) is configured, when the gripper member (24) is controlled in the open configuration thereby releasing the cap (6), to drive a movement of the welding portion (22) back in said first position via said magnetic force.

5. Welding head (17) as claimed in claim 4, wherein the gripper member (24) is configured to maintain the welding portion (22) in the corrected configuration by overcoming said magnetic force as long as it is controlled in its closed configuration and grips the cap (6).

6. Welding head (17) as claimed in claim 4 or 5, wherein the gripper member (24) is coupled to the welding portion (22) so as to be integral in motion therewith.

7. Welding head (17) as claimed in any one of the foregoing claims, wherein the magnetic device (25) includes at least one first permanent magnet (25a) integrally carried by the support portion (20), and at least one second permanent magnet (25b) integrally carried by the welding portion (22), the at least one first permanent magnet (25a) and the at least one second permanent magnet (25b) magnetically interacting with one another for attracting the welding portion (22) towards the first position thereby biasing it towards its resting configuration.

8. Welding head (17) as claimed in claim 7, wherein the first permanent magnets (25a) and the second permanent magnets (25b) face one another by magnetic poles of opposite sign.

9. Welding head (17) as claimed in any one of the foregoing claims, and comprising a guiding device (26) configured for guiding the movement of the welding portion (22) between the first position and each second position of said plurality of second positions;
the guiding device (26) including a slide member (26a) carried by one of the support portion (20) and welding portion (22), and a rail member (26b) carried by the other of the support portion (20) and welding portion (22).

10. Welding head (17) as claimed in claim 9, wherein the rail member (26b) linearly extends along a correction direction (F) which is transversal, and preferably orthogonal, to the advancement direction (D).

11. Welding head (17) as claimed in any one of the foregoing claims, wherein the magnetic device (25) is configured to drive a movement of the welding portion (22) from each second position of the plurality of second positions to the first position along a correction direction (F) which is transversal, and preferably orthogonal, to the advancement direction (D).

12. Welding head (17) as claimed in claim 7 and 11, wherein the magnetic device (25) comprises two said first magnets (25a) integrally carried by the support portion (20) and arranged on opposite sides of the support portion (20), with respect to the advancement direction (D), and two said second magnets (25b), integrally carried by the welding portion (22) and arranged on opposite sides of the welding portion (22), with respect to the advancement direction (D), such that two pairs of magnetically interacting magnets are defined, each pair including one first magnet (25a) and one second magnet (25b), the two pairs being arranged on opposite sides of the welding head (17), with respect to the advancement direction (D).

13. Welding head (17) as claimed in any one of the foregoing claims, wherein the welding device (23) includes an electromagnetic inductor configured to induce an electric current in an electrically conductive portion of the cap (6), so as to melt a heat-sealable portion of the cap (6) thereby determining a permanent joining of the cap (6) to the collar (5).

14. Capping apparatus (13) for securing caps (6) onto pouring collars (5) of sealed packages (2) containing a pourable product, the capping apparatus (13) comprising:
- a conveyor (14) configured to advance a succession of packages (2) along an advancement direction (D) and through an application station (K), each package (2) being provided with a respective collar (5);
- a feeding unit (15) configured to sequentially feed the caps (6) towards the application station (K) at which each cap (6) is released from the feeding unit (15) and is arranged onto one respective collar (5);
- at least one welding head (17) as claimed in any one of the foregoing claims, the welding head (17) being configured for welding each cap (6) to the respective collar (5).

15. Method for securing a cap (6) to a pouring collar (5) of a sealed package (2) containing a pourable product, the method comprising the steps of:
- advancing the sealed package (2), provided with one respective collar (5), along an advancement direction (D) and through an application station (K);
- feeding the cap (6) towards the application station (K), at which the cap (6) is arranged onto the collar (5);
- displacing a welding portion (22) of the welding head (17), with respect to a support portion (20) of the welding head (17), between a first position in which it is nominally aligned in a resting configuration with the support portion (20), and a plurality of second positions in which it is displaced relatively to the support portion (20) for assuming a corrected configuration thereby adapting to an actual positioning of the cap (6) with respect to the advancement direction (D);
- moving the welding portion (22), with respect to the support portion (20), back in the first position;
wherein the step of moving the welding portion (22) back in the first position includes magnetically biasing/attracting the welding portion (22) towards the first position.

16. Method as claimed in claim 15, wherein the step of moving the welding portion (22) comprises exerting an attractive magnetic force onto the welding portion (22), so as to define a magnetic spring and so that the magnetic force defines an elastic return force of the magnetic spring.
